# EUROPEAN PATENT SPECIFICATION

(11) **EP 4 459 229 B1**
(45) Date of publication and mention of the grant of the patent: **25.02.2026**
(21) Application number: 24169865.3
(22) Date of filing: 12.04.2024
(51) Int. Cl.: G01C 21/00

(54) **DATA ALIGNMENT METHOD, MULTI-DEVICE SYSTEM AND NON-TRANSITORY COMPUTER READABLE STORAGE MEDIUM**
DATENAUSRICHTUNGSVERFAHREN, SYSTEM MIT MEHREREN VORRICHTUNGEN UND NICHTTRANSITORISCHES COMPUTERLESBARES SPEICHERMEDIUM
PROCÉDÉ D'ALIGNEMENT DE DONNÉES, SYSTÈME MULTI-DISPOSITIFS ET SUPPORT D'INFORMATIONS NON TRANSITOIRE LISIBLE PAR ORDINATEUR

(30) Priority: 14.04.2023 US 202363496023 P; 08.03.2024 US 202418599229
(43) Date of publication of application: 06.11.2024
(73) Proprietor: HTC Corporation, Taoyuan City 330, (TW)
(72) Inventor: HUANG, Chun Kai, 330 Taoyuan City (TW); TAO, Sheng-Hui, 330 Taoyuan City (TW)
(74) Representative: Klang, Alexander H.

(56) References cited:
- FORSTER CHRISTIAN ET AL: "Collaborative Monocular SLAM with Multiple Micro Aerial Vehicles", 2013 IEEE/RSJ INTERNATIONAL CONFERENCE ON INTELLIGENT ROBOTS AND SYSTEMS (IROS), 7 November 2013 (2013-11-07), Tokyo, Japan, XP093197369, Retrieved from the Internet <URL:https://ieeexplore.ieee.org/stamp/stamp.jsp?tp=&arnumber=6696923> [retrieved on 20240823]
- DEUTSCH ISAAC ET AL: "A framework for multi-robot pose graph SLAM", 2016 IEEE INTERNATIONAL CONFERENCE ON REAL-TIME COMPUTING AND ROBOTICS (RCAR), IEEE, 6 June 2016 (2016-06-06), pages 567 - 572, XP033022978, DOI: 10.1109/RCAR.2016.7784092

## Description

### CROSS - REFERENCE TO RELATED APPLICATION

### BACKGROUND

### Field of Invention

This disclosure relates to a method and a system, in particular to a data alignment method and a multi-device system.

### Description of Related Art

In some fields of environment exploration, some related arts use multiple visual-based self-tracking devices to generate multiple local maps, respectively, and use a single computation unit to establish the map of environment by merging the local maps. However, these related arts require transmitting the local maps to the computation unit, which means that these related arts would spend a lot of time on transmitting a large amount of data (i.e., the local maps) and put a heavy computational burden on the computation unit. In these cases, these related arts would establish the map of environment with low efficiency, which is inconvenient for the user.

Attention is drawn to a paper by Forster Christian et Al, entitled: "Collaborative Monocular SLAM with Multiple Micro Aerial Vehicles", 2013 IEEE/RSJ International Conference on Intelligent Robots and Systems (IROS), 7 November 2013 (2013-11-07), XP093197369, Tokyo, Japan. This paper presents a framework for collaborative localization and mapping with multiple Micro Aerial Vehicles (MAVs) in unknown environments. Each MAV estimates its motion individually using an onboard, monocular visual odometry algorithm. The system of MAVs acts as a distributed preprocessor that streams only features of selected keyframes and relative-pose estimates to a centralized ground station. The ground station creates an individual map for each MAV and merges them together whenever it detects overlaps. This allows the MAVs to express their position in a common, global coordinate frame. The key to real-time performance is the design of data-structures and processes that allow multiple threads to concurrently read and modify the same map. The presented framework is tested in both indoor and outdoor environments with up to three MAVs.

### SUMMARY

The present invention is set forth in the independent claims, respectively. Further embodiments of the invention are described in the dependent claims.

An aspect of present disclosure relates to a data alignment method applicable to a multi-device system in an environment, wherein the multi-device system includes a host device and a client device, and the data alignment method includes: by the client device, transmitting image data to the host device; by the host device, generating host-based spatial information of the client device in a host map of the environment established by the host device according to the image data; by the host device, transmitting the host-based spatial information to the client device; by the client device, generating data alignment information according to a difference between the host-based spatial information and client-based spatial information of the client device in a client map of the environment established by the client device; and by the client device, adjusting the client-based spatial information according to the data alignment information, to generate an aligned spatial information of the client device in the host map.

Another aspect of present disclosure relates to a multi-device system. The multi-device system includes a host device and a client device. The host device is configured to establish a host map of an environment. The client device is configured to: transmit image data to the host device when the host device and the client device are communicatively connected, wherein the host device is configured to generate host-based spatial information of the client device in the host map according to the image data, and is configured to transmit the host-based spatial information to the client device; generate data alignment information according to a difference between the host-based spatial information and client-based spatial information of the client device in a client map of the environment established by the client device; and adjust the client-based spatial information according to the data alignment information, to generate an aligned spatial information of the client device in the host map.

Another aspect of present disclosure relates to a non-transitory computer readable storage medium with a computer program to execute a data alignment method applicable to a multi-device system in an environment, wherein the multi-device system includes a host device and a client device, and the data alignment method includes: by the client device, transmitting image data to the host device; by the host device, generating host-based spatial information of the client device in a host map of the environment established by the host device according to the image data; by the host device, transmitting the host-based spatial information to the client device; by the client device, generating data alignment information according to a difference between the host-based spatial information and client-based spatial information of the client device in a client map of the environment established by the client device; and by the client device, adjusting the client-based spatial information according to the data alignment information, to generate an aligned spatial information of the client device in the host map.

It is to be understood that both the foregoing general description and the following detailed description are by examples, and are intended to provide further explanation of the invention as claimed.

### BRIEF DESCRIPTION OF THE DRAWINGS

The present disclosure can be more fully understood by reading the following detailed description of the embodiment, with reference made to the accompanying drawings as follows:
Fig. 1 is a schematic diagram of a multi-device system applied in an environment in accordance with some embodiments of the present disclosure;
Fig. 2 is a block diagram of the multi-device system in accordance with some embodiments of the present disclosure;
Fig. 3 is a flow diagram of a data alignment method in accordance with some embodiments of the present disclosure;
Fig. 4 is a schematic diagram of a host map and a key frame set thereof in accordance with some embodiments of the present disclosure;
Fig. 5 is a schematic diagram of a client map and a key frame set thereof in accordance with some embodiments of the present disclosure;
Fig. 6 is a flow diagram of the data alignment method in accordance with some embodiments of the present disclosure; and
Fig. 7 is a block diagram of the multi-device system in accordance with some embodiments of the present disclosure.

### DETAILED DESCRIPTION

The embodiments are described in detail below with reference to the appended drawings to better understand the aspects of the present application. However, the provided embodiments are not intended to limit the scope of the disclosure, and the description of the structural operation is not intended to limit the order in which they are performed. Any device that has been recombined by components and produces an equivalent function is within the scope covered by the disclosure.

As used herein, "coupled" and "connected" may be used to indicate that two or more elements physical or electrical contact with each other directly or indirectly, and may also be used to indicate that two or more elements cooperate or interact with each other.

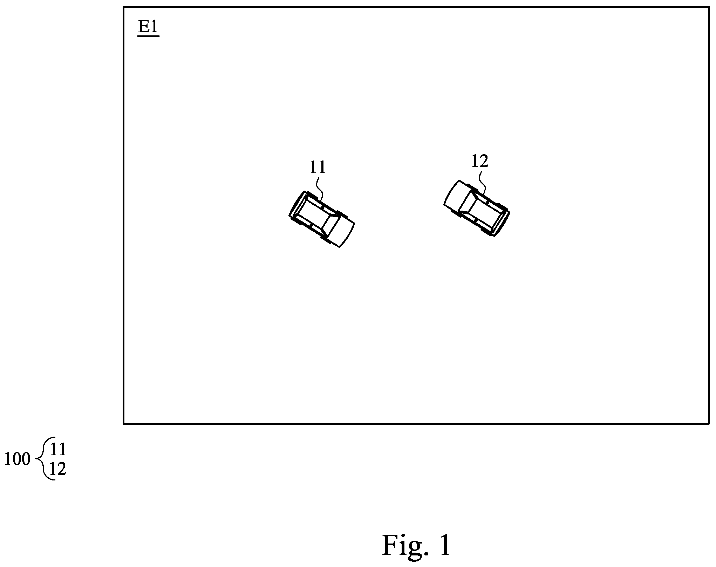

Referring to Fig. 1, Fig. 1 is a schematic diagram of a multi-device system 100 in an environment E1 in accordance with some embodiments of the present disclosure. In some embodiments, the multi-device system 100 is configured to establish a map of the environment E1 by some visual-based localization technologies (e.g., Simultaneous Localization and Mapping (SLAM), etc.). In particular, the environment E1 can be a public place (e.g., a gaming place, a restaurant, etc.) or a private place (e.g., a workplace, a house, etc.).

In some embodiments, as shown in Fig. 1, the multi-device system 100 includes a host device 11 and a client device 12. In particular, the host device 11 and the client device 12 each can be implemented by an electronic device capable of sensing the environment E1 and localizing itself in the environment E1. Furthermore, the host device 11 and the client device 12 each can be integrated with a wearable device (e.g., a head-mounted device (HMD), etc.) worn by a user, a vehicle (e.g., car as shown in Fig. 1) operated by the user, or an autonomous mobile robot (e.g., a clean robot, a sweeping robot, a food delivery robot, etc.), so that the host device 11 and the client device 12 can be moved in different spaces of the environment E1, respectively.

In accordance with the above embodiments, the host device 11 and the client device 12 can sense different spaces of the environment E1, respectively. When the host device 11 and the client device 12 find each other available for wireless communication in the environment E1, the host device 11 and the client device 12 would connect with each other. Accordingly, the client device 12 can align signals, data and/or information related to one space of the environment E1 with signals, data and/or information related to another space of the environment E1, in which the signals, data and/or information related to the another space of the environment E1 are processed by the host device 11. Then, the host device 11 can combine the signals, data and/or information related to the another space of the environment E1 with the signals, data and/or information related to one space of the environment E1 subjected to the alignment. Notably, by such operations, the map of the environment E1 can be established without the host device 11 (or the client device 12) sensing all spaces of the environment E1.

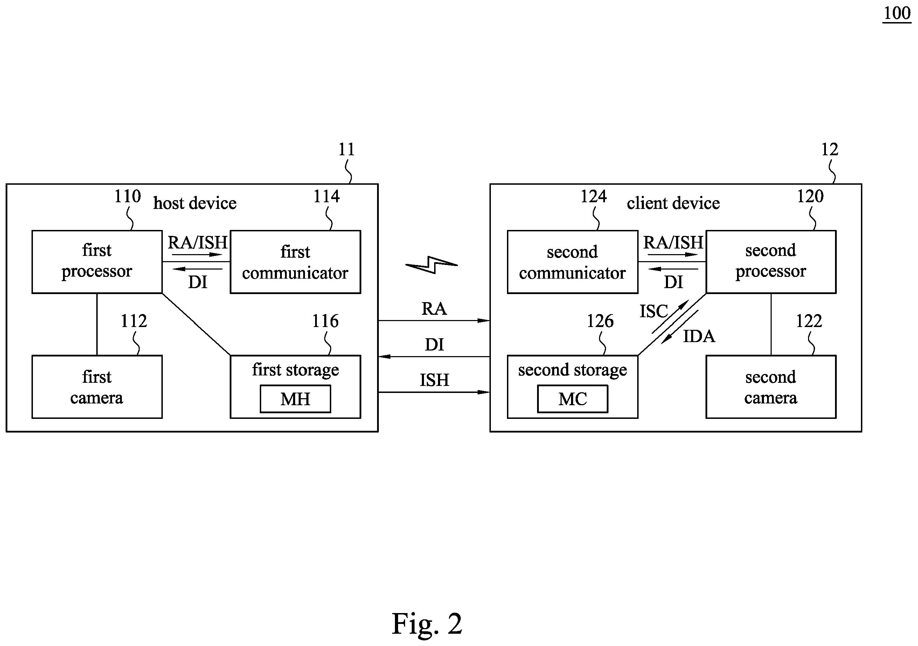

Referring to Fig. 2, Fig. 2 is a block diagram of the host device 11 and the client device 12 of the multi-device system 100 in accordance with some embodiments of the present disclosure. In some embodiments, the host device 11 includes a first processor 110, a first camera 112, a first communicator 114 and a first storage 116. The first processor 110 is communicatively and electrically coupled to the first camera 112, the first communicator 114 and the first storage 116, so as to cooperate with the first camera 112, the first communicator 114 and the first storage 116. Similarly, as shown in Fig. 2, the client device 12 includes a second processor 120, a second camera 122, a second communicator 124 and a second storage 126. The second processor 120 is communicatively and electrically coupled to the second camera 122, the second communicator 124 and the second storage 126, so as to cooperate with the second camera 122, the second communicator 124 and the second storage 126.

In particular, the first processor 110 and the second processor 120 each can be implemented by a central processing unit (CPU), an application-specific integrated circuit (ASIC), a microprocessor, a system on a Chip (SoC) or other suitable processing circuits. The first communicator 114 and the second communicator 124 each can be implemented by a wireless communication module such as Wi-Fi module, Bluetooth Low Energy (BLE) module, Bluetooth module, etc. In addition, the first storage 116 and the second storage 126 each can be implemented by volatile memory, non-volatile memory, or the both.

In some embodiments, the first camera 112 and the second camera 122 each is configured to sense the environment E1 to generate image information of the environment E1. With the image information of the environment E1, the first processor 110 can use at least one visual-based localization technology (e.g., SLAM, etc.) to perform operations such as calculating pose (i.e., orientation and position) of the host device 11, establishing a host map MH of the environment E1, localizing the host device 11 in the environment E1 according to the host map MH, etc. Similarly, with the image information of the environment E1, the second processor 120 can use at least one visual-based localization technology to perform operations such as calculating pose (i.e., orientation and position) of the client device 12, establishing a client map MC of the environment E1, localizing the client device 12 in the environment E1 according to the client map MC, etc.

In some embodiments, the first communicator 114 and the second communicator 124 can establish at least one wireless connection with each other under at least one communication protocol (e.g., Wi-Fi protocol, BLE protocol, Bluetooth protocol, etc.). Accordingly, the first processor 110 and the second processor 120 can communicate with each other through the at least one wireless connection.

In some embodiments, the first processor 110 can store signals, data and/or information (e.g., the image information, the pose of the host device 11, the host map MH, etc.) in the first storage 116, and the second processor 120 can store signals, data and/or information (e.g., the image information, the pose of the client device 12, the client map MC, etc.) in the second storage 126.

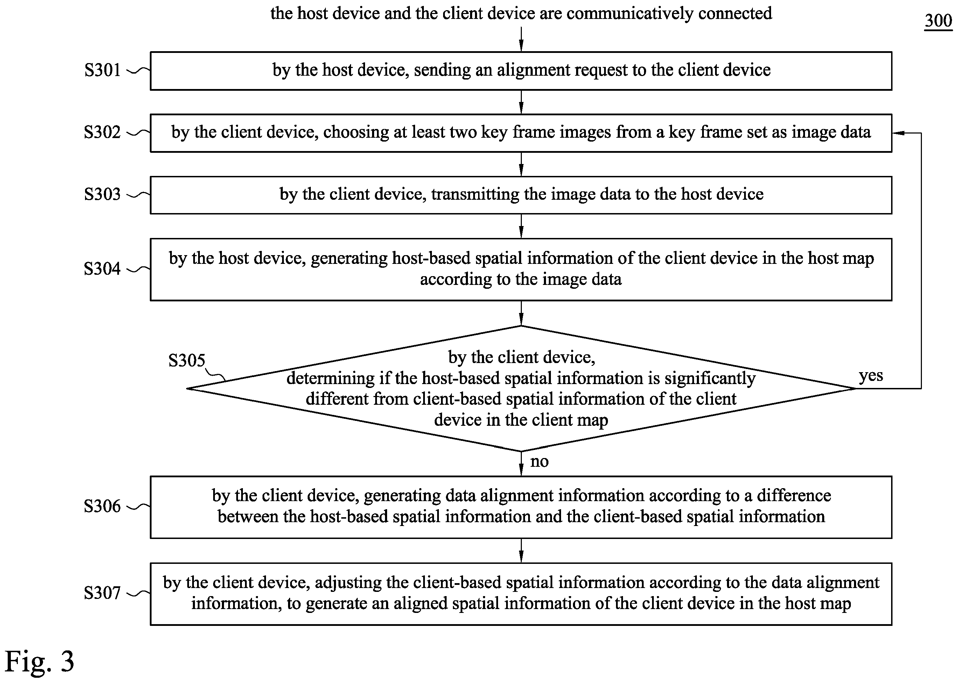

The operations of the host device 11 and the client device 12 of the multi-device system 100 would be further described below with reference to a data alignment method 300. Referring to Fig. 3, Fig. 3 is a flow diagram of the data alignment method 300 in accordance with some embodiments of the present disclosure. In some embodiments, as shown in Fig. 3, the data alignment method 300 can be performed by the multi-device system 100, and includes operations S301-S307. However, the present disclosure should not be limited thereto.

In some embodiments, as shown in Fig. 3, the data alignment method 300 is performed when the host device 11 and the client device 12 are communicatively connected (that is, the aforementioned wireless connection is established between the first communicator 114 of the host device 11 and the second communicator 124 of the client device 12).

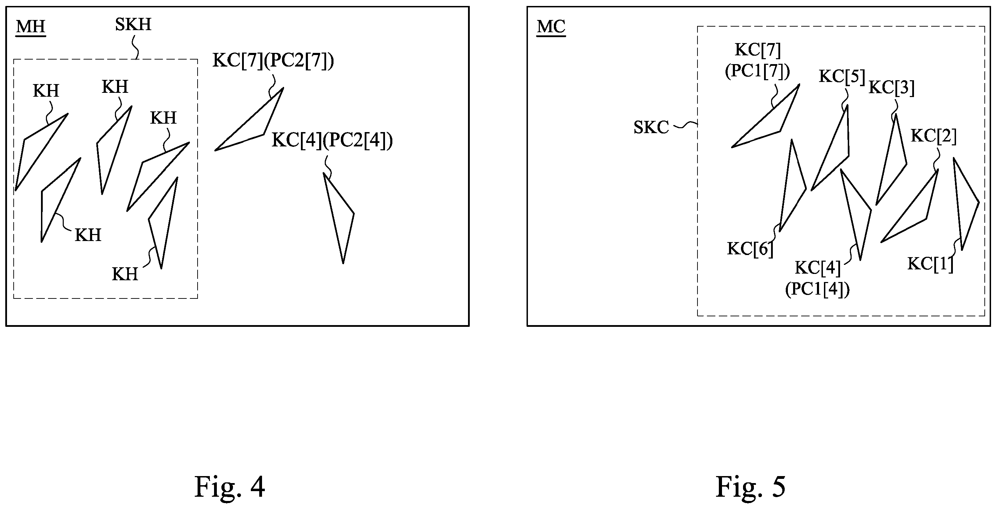

In operation S301, the host device 11 sends an alignment request RA to the client device 12. In some embodiments, as shown in Fig. 2, the first processor 110 generates the alignment request RA, and transmits the alignment request RA to the client device 12 through the first communicator 114. The second processor 120 receives the alignment request RA from the host device 11 through the second communicator 124, so that operation S302 is executed. The execution of operation S302 would be described in detail below with reference to Figs. 4 and 5.

Fig. 4 is a schematic diagram of the host map MH and a key frame set SKH thereof in accordance with some embodiments of the present disclosure. In some embodiments of Fig. 4, the key frame set SKH includes a plurality of key frame images KH. In particular, the key frame images KH include a plurality of feature points (not shown) which are used to generate a plurality of map points (not shown) of the host map MH. In addition, the key frame set SKH can be stored in the first storage 116 in Fig. 2.

Fig. 5 is a schematic diagram of the client map MC and a key frame set SKC thereof in accordance with some embodiments of the present disclosure. In some embodiments of Fig. 5, the key frame set SKC includes a plurality of key frame images KC[1]-KC[7]. In particular, the key frame images KC[1]-KC[7] include a plurality of feature points (not shown) which are used to generate a plurality of map points (not shown) of the client map MC. Notably, the key frame set SKC is generated after the host device 11 and the client device 12 are communicatively connected. Therefore, the key frame images KC[1]-KC[7] can be corresponding to a plurality of connection strength indications (e.g., Received Signal Strength Indication (RSSI)) of the wireless connection established between the host device 11 and the client device 12, respectively, based on the timestamps of the key frame images KC[1]-KC[7] and the timestamps of the connection strength indications. It should be understood that there are other key frame images collected before the host device 11 and the client device 12 are communicatively connected, in which these other key frame images each is not corresponding to the connection strength indication. In addition, the key frame set SKC can be stored in the second storage 126 in Fig. 2.

In accordance with the descriptions of Fig. 5, in some embodiments, the key frame images KC[1]-KC[7] in the key frame set SKC correspond to a plurality of first client pose data (i.e., the aforementioned pose of the client device 12) of the client device 12 in the client map MC, respectively. For example, as shown in Fig. 5, the key frame images KC[4] corresponds to the first client pose data PC1[4] of the client device 12 in the client map MC, and the key frame images KC[7] corresponds to the first client pose data PC1[7] of the client device 12 in the client map MC. In particular, the first client pose data of the client device 12 in the client map MC can be generated by the second processor 120 using the at least one visual-based localization technology. In addition, the first client pose data of the client device 12 in the client map MC can be stored in the second storage 126 in Fig. 2.

In operation S302, the client device 12 chooses at least two key frame images KC[4] and KC[7] from the key frame set SKC as image data DI. The key frame images KC[4] and KC[7] are chosen because following conditions are satisfied. One of the conditions is that both the connection strength indications corresponding to the key frame images KC[4] and KC[7] are greater than a threshold value, which might mean that two field of views through which the key frame images KC[4] and KC[7] are generated are partially overlapped, and might also mean that the key frame images KC[4] and KC[7] have enough common feature points. Another one of the conditions is that the first client pose data PC1[4] corresponding to the key frame image KC[4] and the first client pose data PC1[7] corresponding to the key frame image KC[7] are significantly different from each other (or are not significantly similar to each other), which might help develop a consensus on map perception among the host device 11 and the client device 12. For example, a distance between the position of the client device 12 indicated by the first client pose data PC1[4] and the position of the client device 12 indicated by the first client pose data PC1[7] is greater than a preset shortest distance (e.g., 35 cm). For another example, a difference between the orientation of the client device 12 indicated by the first client pose data PC1[4] and the orientation of the client device 12 indicated by the first client pose data PC1[7] is greater than one-third of the field of view of the second camera 122. Yet another one of the conditions is that an amount of the feature points of each of the key frame image KC[4] and the key frame image KC[7] is greater than an amount threshold. In particular, the amount threshold can be an average amount of feature points of all key frame images in the current client map MC minus a standard deviation of the current client map MC. It is noted that if the client device 12 chooses only one key frame image KC as image data DI, an incorrect consensus on map perception among the host device 11 and the client device 12 may be developed.

In operation S303, the client device 12 transmits the image data DI to the host device 11. In some embodiments, as shown in Fig. 2, the second processor 120 transmits the image data DI (which includes the key frame images KC[4] and KC[7]) to the host device 11 through the second communicator 124. The first processor 110 of the host device 11 receives the image data DI from the client device 12 through the first communicator 114, so that operation S304 is executed.

In operation S304, the host device 11 generates host-based spatial information ISH of the client device 12 in the host map MH according to the image data DI. In some embodiments, as shown in Fig. 4, the first processor 110 calculates two second client pose data PC2[4] and PC2[7] of the client device 12 in the host map MH as the host-based spatial information ISH according to the key frame images KC[4] and KC[7] included by the image data DI. In particular, the first processor 110 can use the relative relation between the key frame image KC[4] and one of the key frame images KH directly followed by the key frame image KC[4] in time sequence to estimate the second client pose data PC2[4] of the client device 12 in the host map MH. Similarly, the second client pose data PC2[7] of the client device 12 in the host map MH can be estimated according to the relative relation between the key frame image KC[7] and one of the key frame images KH directly followed by the key frame image KC[7] in time sequence.

As shown in Fig. 2, the first processor 110 transmits the host-based spatial information ISH to the client device 12 through the first communicator 114. The second processor 120 of the client device 12 receives the host-based spatial information ISH from the host device 11 through the second communicator 124, so that operation S305 is executed.

In operation S305, the client device 12 determines if the host-based spatial information ISH is significantly different from client-based spatial information ISC of the client device 12 in the client map MC. In some embodiments, the client-based spatial information ISC includes the aforementioned first client pose data PC1[4] and PC1[7] corresponding to the key frame images KC[4] and KC[7]. Accordingly, the second processor 120 can calculate a first transformation data for transforming the first client pose data PC1[4] into the first client pose data PC1[7], can calculate a second transformation data for transforming the second client pose data PC2[4] into the second client pose data PC2[7], and can determine if a difference between the first transformation data and the second transformation data is smaller than an invalid threshold. In the above descriptions, the first transformation data might mean the distance and/or the orientation difference required to make the first client pose data PC1[4] similar to the first client pose data PC1[7], and the second transformation data might mean the distance and/or the orientation difference required to make the second client pose data PC2[4] similar to the second client pose data PC2[7]. Also, the invalid threshold may be a distance of 5 cm and/or an orientation difference of 3 degrees.

In some embodiments, the difference between the first transformation data and the second transformation data is smaller than the invalid threshold, and therefore the second processor 120 determines that the host-based spatial information ISH is not significantly different from the client-based spatial information ISC. In this case, it is represented that the host device 11 understands or realizes the environment E1 in the similar way as the client device 12. Accordingly, operation S306 can be executed.

In some embodiments, the difference between the first transformation data and the second transformation data is not smaller than the invalid threshold, and therefore the second processor 120 determines that the host-based spatial information ISH is significantly different from the client-based spatial information ISC. In this case, it is represented that the host device 11 does not understand or realize the environment E1 in the similar way as the client device 12. Accordingly, operations S302-S305 would be executed again. That is to say, the client device 12 may choose and transmit another at least two key frame images (which are different from the key frame images KC[4] and KC[7]) from the key frame set SKC to the host device 11, so that the host device 11 can re-generate the host-based spatial information ISH to the client device 12 according to the another at least two key frame images (i.e., operations S304-S305).

In operation S306, the client device 12 generates data alignment information IDA according to a difference between the host-based spatial information ISH and the client-based spatial information ISC. In some embodiments, one of a first difference between the first client pose data PC1[4] and the second client pose data PC2[4] and a second difference between the first client pose data PC1[7] and the second client pose data PC2[7] is used as the data alignment information IDA. In particular, the second processor 120 compares the second client pose data PC2[4] and the first client pose data PC1 [4] which both corresponding to the key frame image KC[4] to obtain the first difference (e.g., the distance and/or the orientation difference required to make the first client pose data PC1[4] similar to the second client pose data PC2[4]), and compares the second client pose data PC2[7] and the first client pose data PC1[7] which both corresponding to the key frame image KC[7] to obtain the second difference (e.g., the distance and/or the orientation difference required to make the first client pose data PC1[7] similar to the second client pose data PC2[7]). In some other embodiments, an average of the aforementioned first difference and second difference is used as the data alignment information IDA. In some other embodiments, an interpolation value calculated by performing the linear interpolation on the aforementioned first difference and second difference is used as the data alignment information IDA. As shown in Fig. 2, the data alignment information IDA can be stored in the second storage 126.

In operation S307, the client device 12 adjusts the client-based spatial information ISC according to the data alignment information IDA, to generate an aligned spatial information of the client device 12 in the host map MH. In some embodiments, the second processor 120 uses the data alignment information IDA to align spatial information (e.g., the aforementioned first client pose data, the orientation and/or the position indicated by the aforementioned first client pose data, etc.) in the client map MC with the host map MH. That is to say, the client device 12 is capable of transforming the spatial information from being in the client map MC into being in the host map MH by the data alignment information IDA. In accordance with the descriptions of operation S306, in case that the first client pose data PC1[4] (or its nearby data) is going to be aligned, the data alignment information IDA may be the first difference between the first client pose data PC1[4] and the second client pose data PC2[4]. In case that the first client pose data PC1[7] (or its nearby data) is going to be aligned, the data alignment information IDA may be the second difference between the first client pose data PC1[7] and the second client pose data PC2[7]. In case that the data between the first client pose data PC1[4] and the first client pose data PC1[7] is going to be aligned, the data alignment information IDA may be said interpolation value.

In some further embodiments, when the multi-device system 100 (or the host device 11) is requested for spatial information related to one space of the environment E1 sensed by the client device 12, the host device 11 may notify the client device 12 to execute operation S307. In other words, operation S307 may be executed in response to a request for the spatial information related to one space of the environment E1 sensed by the client device 12.

As can be seen from the embodiments of Figs. 2 and 3, by choosing and providing the image data DI to the host device 11, the client device 12 can obtain the host-based spatial information ISH calculated by the host device 11, and can use the host-based spatial information ISH calculated by the host device 11 and the client-based spatial information ISC calculated by the client device 12 to generate the data alignment information IDA. Also, by the data alignment information IDA, the multi-device system 100 can provide the spatial information related to one space of the environment E1 sensed by the client device 12 without requiring the host device 11 actually sensing said one space of the environment E1. In such arrangements, an amount of data transferred and an amount of data processed in the multi-device system 100 can be minimized, so that the multi-device system 100 has advantages of light computational burden, improvement in efficiency at establishing the map of the environment E1, etc.

In some further embodiments of Fig. 3, after operation S306, the host device 10 can find another client device (different from the client device 12 in Fig. 1 or 2) available for communication. In such case, operations S301-S307 can be executed again, and therefore said another client device can generate its own data alignment information IDA.

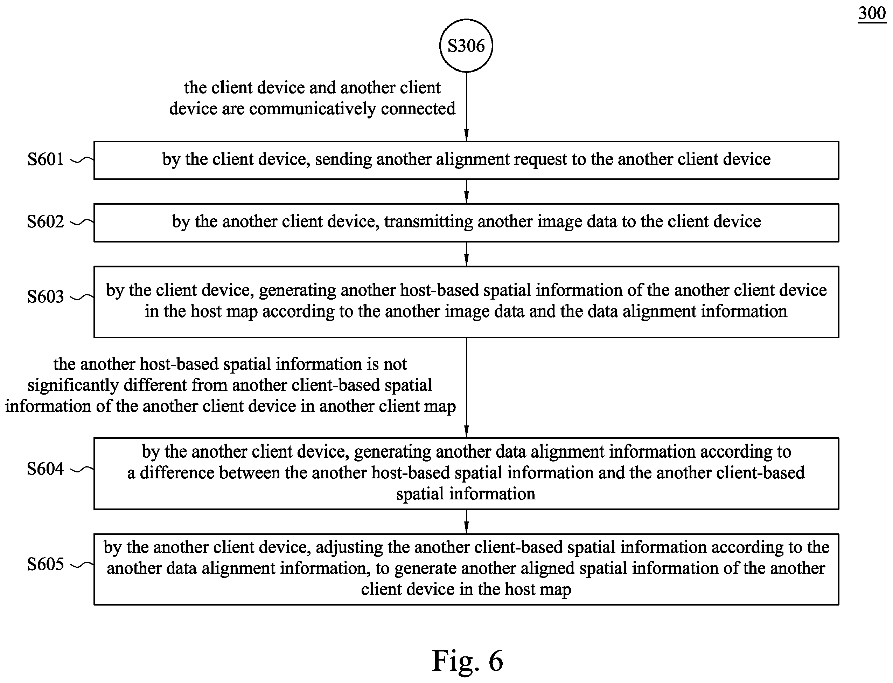

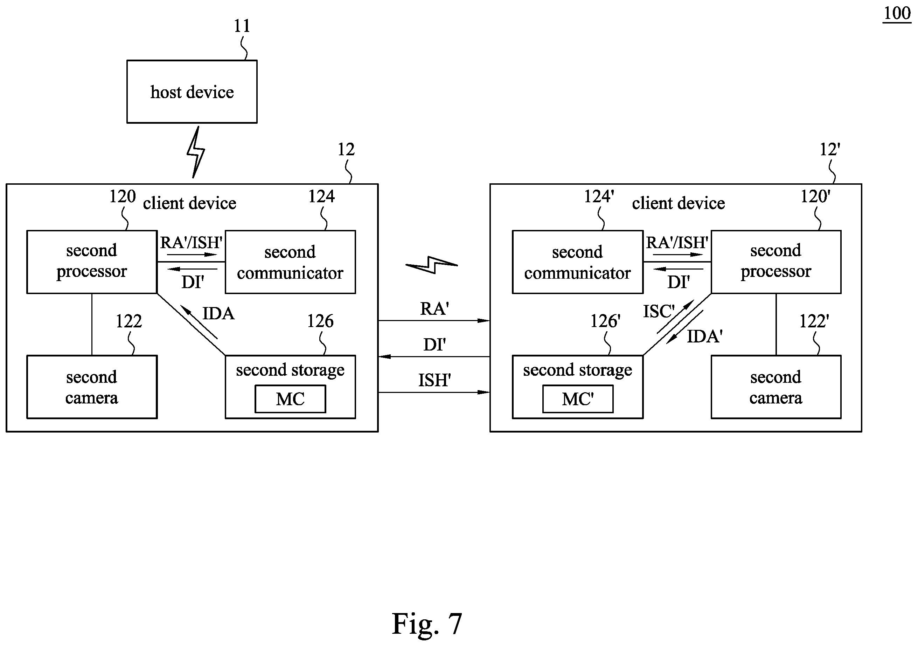

It should be understood that the data alignment method 300 is not limited to the flow diagram as shown in Fig. 3. Referring to Fig. 6, Fig. 6 is a flow diagram of the data alignment method 300 in accordance with some embodiments of the present disclosure. In some embodiments, as shown in Fig. 6, the data alignment method 300 further includes operations S601-S605, which would be described in detail below with reference to Fig. 7.

Referring to Fig. 7, Fig. 7 is a block diagram of the multi-device system 100 in accordance with some embodiments of the present disclosure. In some embodiments, the multi-device system 100 further includes another client device 12'. The client device 12' includes a second processor 120', a second camera 122', a second communicator 124' and a second storage 126'. The descriptions of the second processor 120', the second camera 122', the second communicator 124' and the second storage 120' are similar to those of the client device 12, and therefore are omitted herein. It can be seen that the number of the client device of the multi-device system 100 is equal or greater than 1.

In some embodiments, as shown in Fig. 6, operations S601-S605 are performed when the client device 12 and the client device 12' are communicatively connected (that is, a wireless connection is established between the second communicator 124 of the client device 12 and the second communicator 124' of the client device 12').

In operation S601, the client device 12 sends another alignment request RA' to the client device 12'. In some embodiments, as shown in Fig. 7, the second processor 120 transmits the alignment request RA' to the client device 12' through the second communicator 124. The second processor 120' of the client device 12' receives the alignment request RA' from the client device 12 through the second communicator 124'. Then, the second processor 120' chooses at least two key frame images (not shown) from a key frame set (which is generated after the client device 12 and the client device 12' are communicatively connected) of another client map MC' stored in the second storage 126' according to the aforementioned conditions which should be satisfied, so that operation S602 is executed.

In operation S602, the client device 12' transmits another image data DI' to the client device 12. In some embodiments, the aforementioned at least two key frame images chosen by the second processor 120' is transmitted as the image data DI' to the client device 12 through the second communicator 124'. The second processor 120 of the client device 12 receives the image data DI' from the client device 12' through the second communicator 124.

In operation S603, the client device 12 generates another host-based spatial information ISH' of the client device 12' in the host map MH according to the image data DI' and the data alignment information IDA. In some embodiments, the second processor 120 calculates at least two client pose data of the client device 12' in the client map MC according to the aforementioned at least two key frame images included by the image data DI', which are similar to the descriptions of operation S304. Then, the second processor 120 adjusts the aforementioned at least two client pose data according to the data alignment information IDA, to generate the host-based spatial information ISH'. That is to say, the second processor 120 uses the data alignment information IDA to transform the aforementioned at least two client pose data of the client device 12' from being in the client map MC into being in the host map MH, so as to generate at least two aligned client pose data of the client device 12' in the host map MH as the host-based spatial information ISH'.

After operation S603, as shown in Fig. 7, the second processor 120' of the client device 12' may receive the host-based spatial information ISH' from the client device 12 through the second communicator 124', and may determine if the host-based spatial information ISH' is significantly different from another client-based spatial information ISC' of the client device 12' in the client map MC'. In particular, the client-based spatial information ISC' may include at least two client pose data of the client device 12' in the client map MC', and these at least two client pose data of the client device 12' in the client map MC' are generated by the client device 12' according to the aforementioned at least two key frame images chosen by the second processor 120'. The operation that the second processor 120' determines if the host-based spatial information ISH' is significantly different from the client-based spatial information ISC' is similar to operation S305 in Fig. 3, and thus the description thereof is omitted herein.

In some embodiments, as shown in Fig. 6, the second processor 120' determines that the host-based spatial information ISH' is not significantly different from the client-based spatial information ISC', and thus operation S604 is executed. In operation S604, the client device 12' generates another data alignment information IDA' according to a difference between the host-based spatial information ISH' and the client-based spatial information ISC'. It should be understood that operation S604 is similar to operation S306 in Fig. 3, and thus the description thereof is omitted herein.

In operation S605, the client device 12' adjusts the client-based spatial information ISC' according to the data alignment information IDA', to generate another aligned spatial information of the client device 12' in the host map MH. In some embodiments, the client device 12' is capable of transforming the spatial information from being in the client map MC' into being in the host map MH by the data alignment information IDA'. It should be understood that operation S605 is similar to operation S307 in Fig. 3, and thus the description thereof is omitted herein. For example, operation S605 may be executed in response to a request for the spatial information related to one space of the environment E1 sensed by the client device 12'.

As can be seen from the embodiments of Figs. 6 and 7, the client device 12, which generated the data alignment information IDA already (that is, which is capable of transforming the spatial information from being in the client map MC into being in the host map MH established by the host device 11), can act as a semi-host device, to help other client devices in the multi-device system 100 in generating their own data alignment information (e.g., the data alignment information IDA' of the client device 12'). Eventually, every client device in the multi-device system 100 is capable of transforming the spatial information from being in its own established map into being in the host map MH established by the host device 11. In such arrangements, the computational burden of calculating according to the at least two key frame images of each of the client devices 12 and 12' can be shared among the host device 11 and the client device 12 instead of being on the host device 11 only. That is to say, the multi-device system 100 has advantages of sharing the computational burden, etc.

The disclosed methods, may take the form of a program code (i.e., executable instructions) embodied in tangible media, such as floppy diskettes, CD-ROMS, hard drives, or any other transitory or non-transitory machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

Although the present disclosure has been described in considerable detail with reference to certain embodiments thereof, other embodiments are possible. Therefore, the scope of the appended claims should not be limited to the description of the embodiments contained herein. It will be apparent to those skilled in the art that various modifications and variations can be made to the structure of the present disclosure without departing from the scope of the invention. In view of the foregoing, it is intended that the present invention cover modifications and variations of this invention provided they fall within the scope of the following claims.

## Claims

1. A data alignment method, applicable to a multi-device system in an environment, wherein the multi-device system comprises a host device (11) and a client device (12), and the data alignment method comprises:
by the host device, establishing a host map of the environment by a host camera sensor of the host device, and localizing the host device in the environment according to the host map;
by the client device, establishing a client map of the environment by a client camera sensor of the client device, and localizing the client device in the environment according to the client map;
by the client device, transmitting (S303) image data to the host device;
by the host device, generating (S304) host-based spatial information of the client device in the host map of the environment according to the image data;
by the host device, transmitting the host-based spatial information to the client device;
by the client device, generating (S306) data alignment information according to a difference between the host-based spatial information and client-based spatial information of the client device in the client map; and
by the client device, adjusting (S307) the client-based spatial information according to the data alignment information, to generate an aligned spatial information of the client device in the host map.

2. The data alignment method of claim 1, further comprising:
by the host device, sending (S301) an alignment request to the client device to request for the image data.

3. The data alignment method of claim 1, further comprising:
by the client device, choosing (S302) at least two key frame images from a key frame set as the image data, wherein the key frame set is generated after the host device and the client device are communicatively connected, the at least two key frame images correspond to at least two first client pose data of the client device in the client map, and the at least two first client pose data are significantly different from each other.

4. The data alignment method of claim 3, wherein generating the host-based spatial information of the client device in the host map according to the image data comprises:
by the host device, calculating at least two second client pose data of the client device in the host map according to the at least two key frame images.

5. The data alignment method of claim 3, wherein an amount of feature points of each of the at least two key frame images is greater than an amount threshold.

6. The data alignment method of claim 1, further comprising:
by the client device, determining (S305) if the host-based spatial information is significantly different from the client-based spatial information, wherein the data alignment information is generated when the host-based spatial information is not significantly different from the client-based spatial information.

7. The data alignment method of claim 6, further comprising:
by the client device, transmitting (S302) another at least two key frame images to the host device when the host-based spatial information is significantly different from the client-based spatial information.

8. The data alignment method of claim 6, wherein determining (S305) if the host-based spatial information is significantly different from the client-based spatial information comprises:
by the client device, determining if a difference between a first transformation data and a second transformation data is smaller than an invalid threshold, wherein the first transformation data is configured to transform one first client pose data of the client device in the client map into another first client pose data of the client device in the client map, and the second transformation data is configured to transform one second client pose data of the client device in the host map into another second client pose data of the client device in the host map.

9. The data alignment method of claim 1, further comprising:
by another client device of the multi-device system, transmitting (S602) another image data to the client device;
by the client device, generating (S603) another host-based spatial information of the another client device in the host map according to the another image data and the data alignment information;
by the another client device, generating (S604) another data alignment information according to a difference between the another host-based spatial information and another client-based spatial information of the another client device in another client map of the environment established by the another client device; and
by the another client device, adjusting (S605) the another client-based spatial information according to the another data alignment information, to generate another aligned spatial information of the another client device in the host map.

10. The data alignment method of claim 9, wherein generating the another host-based spatial information of the another client device in the host map according to the another image data and the data alignment information comprises:
by the client device, calculating at least two client pose data of the another client device in the client map according to at least two key frame images of the another image data; and
by the client device, adjusting the at least two client pose data according to the data alignment information, to generate the another host-based spatial information.

11. A multi-device system, comprising:
a host device (11), configured to establish a host map of an environment by a host camera sensor of the host device, and localize the host device in the environment according to the host map; and
a client device (12), configured to:
establish a client map of the environment by a client camera sensor of the client device, and localize the client device in the environment according to the client map;
transmit (S303) image data to the host device when the host device and the client device are communicatively connected, wherein the host device is configured to generate host-based spatial information of the client device in the host map according to the image data, and is configured to transmit the host-based spatial information to the client device;
generate data alignment information according to a difference between the host-based spatial information and client-based spatial information of the client device in the client map;
adjust the client-based spatial information according to the data alignment information, to generate an aligned spatial information of the client device in the host map.

12. The multi-device system of claim 11, wherein the multi-device system further comprises another client device;
wherein the another client device is configured to:
transmit another image data to the client device when the client device and the another client device are communicatively connected, wherein the client device is further configured to generate another host-based spatial information of the another client device in the host map according to the another image data and the data alignment information;
generate another data alignment information according to a difference between the another host-based spatial information and another client-based spatial information of the another client device in another client map of the environment established by the another client device; and
adjust the another client-based spatial information according to the another data alignment information, to generate another aligned spatial information of the another client device in the host map.

13. The multi-device system of claim 12, wherein the client device is configured to:
calculate at least two client pose data of the another client device in the client map according to at least two key frame images of the another image data; and
adjust the at least two client pose data according to the data alignment information, to generate the another host-based spatial information.

14. The multi-device system of claim 12, wherein the client device is further configured to send another alignment request to the another client device to request for the another image data.

15. A non-transitory computer readable storage medium with a computer program to execute a data alignment method applicable to a multi-device system in an environment, wherein the multi-device system comprises a host device and a client device, and the data alignment method comprises:
by the host device, establishing a host map of the environment by a host camera sensor of the host device, and localizing the host device in the environment according to the host map;
by the client device, establishing a client map of the environment by a client camera sensor of the client device, and localizing the client device in the environment according to the client map;
by the client device, transmitting image data to the host device;
by the host device, generating host-based spatial information of the client device in the host map of the environment according to the image data;
by the host device, transmitting the host-based spatial information to the client device;
by the client device, generating data alignment information according to a difference between the host-based spatial information and client-based spatial information of the client device in the client map; and
by the client device, adjusting the client-based spatial information according to the data alignment information, to generate an aligned spatial information of the client device in the host map.

## Patentansprüche

1. Datenausrichtungsverfahren, anwendbar auf ein Mehrgerätsystem in einer Umgebung, wobei das Mehrgerätsystem ein Host-Gerät (11) und ein Client-Gerät (12) aufweist und das Datenausrichtungsverfahren Folgendes aufweist:
durch das Host-Gerät, Erstellen einer Host-Karte der Umgebung durch einen Hostkamerasensor des Host-Geräts und Lokalisieren des Host-Geräts in der Umgebung gemäß der Host-Karte;
durch das Client-Gerät, Erstellen einer Client-Karte der Umgebung durch einen Client-Kamerasensor des Client-Geräts und Lokalisieren des Client-Geräts in der Umgebung gemäß der Client-Karte;
durch das Client-Gerät, Übertragen (S303) von Bilddaten an das Host-Gerät;
durch das Host-Gerät, Erzeugen (S304) von hostbasierten räumlichen Informationen des Client-Geräts in der Host-Karte der Umgebung gemäß den Bilddaten;
durch das Host-Gerät, Übertragen der hostbasierten räumlichen Informationen an das Client-Gerät;
durch das Client-Gerät, Erzeugen (S306) von Datenausrichtungsinformationen gemäß einer Differenz zwischen den hostbasierten räumlichen Informationen und den clientbasierten räumlichen Informationen des Client-Geräts in der Client-Karte; und
durch das Client-Gerät, Anpassen (S307) der clientbasierten räumlichen Informationen gemäß den Datenausrichtungsinformationen, um ausgerichtete räumliche Informationen des Client-Geräts in der Host-Karte zu erzeugen.

2. Das Datenausrichtungsverfahren nach Anspruch 1, das ferner aufweist:
durch das Host-Gerät, Senden (S301) einer Ausrichtungsanforderung an das Client-Gerät, um die Bilddaten anzufordern.

3. Datenausrichtungsverfahren nach Anspruch 1, das ferner aufweist:
durch das Client-Gerät, Auswählen (S302) von mindestens zwei Schlüsselbildrahmen aus einem Schlüsselbildrahmensatz als Bilddaten ausgewählt werden, wobei der Schlüsselbildrahmensatz erzeugt wird, nachdem das Host-Gerät und das Client-Gerät kommunikativ verbunden sind, wobei die mindestens zwei Schlüsselbildrahmen mindestens zwei ersten Client-Posendaten des Client-Geräts in der Client-Karte entsprechen und wobei sich die mindestens zwei ersten Client-Posendaten erheblich voneinander unterscheiden.

4. Datenausrichtungsverfahren nach Anspruch 3, wobei das Erzeugen der hostbasierten räumlichen Informationen des Client-Geräts in der Host-Karte gemäß den Bilddaten aufweist:
durch das Host-Gerät, Berechnen von mindestens zwei zweiten Client-Posendaten des Client-Geräts in der Host-Karte gemäß den mindestens zwei Schlüsselbilddaten.

5. Datenausrichtungsverfahren nach Anspruch 3, wobei eine Anzahl von Merkmalspunkten jedes der mindestens zwei Schlüsselbilder größer als ein Schwellenwert ist.

6. Datenausrichtungsverfahren nach Anspruch 1, das ferner aufweist:
durch das Client-Gerät, Bestimmen (S305), ob sich die hostbasierten räumlichen Informationen signifikant von den clientbasierten räumlichen Informationen unterscheiden, wobei die Datenausrichtungsinformationen erzeugt werden, wenn sich die hostbasierten räumlichen Informationen nicht signifikant von den clientbasierten räumlichen Informationen unterscheiden.

7. Datenausrichtungsverfahren nach Anspruch 6, das ferner aufweist:
durch das Client-Gerät, Übertragen (S302) von mindestens zwei anderen Schlüsselbildrahmen an das Host-Gerät, wenn sich die hostbasierten räumlichen Informationen erheblich von den clientbasierten räumlichen Informationen unterscheiden.

8. Datenausrichtungsverfahren nach Anspruch 6, wobei das Bestimmen (S305), ob sich die hostbasierten räumlichen Informationen signifikant von den clientbasierten räumlichen Informationen unterscheiden, aufweist:
durch das Client-Gerät, Bestimmen ob eine Differenz zwischen ersten Transformationsdaten und zweiten Transformationsdaten kleiner als ein Ungültigkeitsschwellenwert ist, wobei die ersten Transformationsdaten so konfiguriert sind, dass sie erste Client-Posendaten des Client-Geräts in der Client-Karte in andere erste Client-Posendaten des Client-Geräts in der Client-Karte transformieren, und die zweiten Transformationsdaten so konfiguriert sind, dass sie zweite Client-Posendaten des Client-Geräts in der Host-Karte in andere zweite Client-Posendaten des Client-Geräts in der Host-Karte transformieren.

9. Datenausrichtungsverfahren nach Anspruch 1, das ferner aufweist:
durch ein anderes Client-Gerät des Mehrgerätsystems, Übertragen (S602) anderer Bilddaten an das Client-Gerät;
durch das Client-Gerät, Erzeugen (S603) einer anderen hostbasierten räumlichen Information des anderen Client-Geräts in der Host-Karte gemäß den anderen Bilddaten und den Datenausrichtungsinformationen;
durch das andere Client-Gerät, Erzeugen (S604) einer anderen Datenausrichtungsinformation gemäß einer Differenz zwischen der anderen hostbasierten räumlichen Information und einer anderen clientbasierten räumlichen Information des anderen Client-Geräts in einer anderen Client-Karte der Umgebung, die durch das andere Client-Gerät erstellt wurde; und
durch das andere Client-Gerät, Anpassen (S605) der anderen clientbasierten räumlichen Informationen gemäß den anderen Datenausrichtungsinformationen, um andere ausgerichtete räumliche Informationen des anderen Client-Geräts in der Host-Karte zu erzeugen.

10. Datenausrichtungsverfahren nach Anspruch 9, wobei das Erzeugen der anderen hostbasierten räumlichen Informationen des anderen Client-Geräts in der Host-Karte gemäß den anderen Bilddaten und den Datenausrichtungsinformationen aufweist:
durch das Client-Gerät, Berechnen von mindestens zwei Client-Posendaten des anderen Client-Geräts in der Client-Karte gemäß mindestens zwei Schlüsselbildrahmen der anderen Bilddaten; und
durch das Client-Gerät, Anpassen der mindestens zwei Client-Posendaten gemäß den Datenausrichtungsinformationen, um die anderen hostbasierten räumlichen Informationen zu erzeugen.

11. Ein Mehrgerätsystem, das Folgendes aufweist:
ein Host-Gerät (11), das so konfiguriert ist, dass es eine Host-Karte einer Umgebung durch einen Host-Kamerasensor des Host-Geräts erstellt und das Host-Gerät in der Umgebung gemäß der Host-Karte lokalisiert; und
ein Client-Gerät (12), das konfiguriert ist, zum:
Erstellen einer Client-Karte der Umgebung durch einen Client-Kamerasensor des Client-Geräts und Lokalisieren des Client-Geräts in der Umgebung gemäß der Client-Karte;
Übertragen (S303) von Bilddaten an das Host-Gerät, wenn das Host-Gerät und das Client-Gerät kommunikativ verbunden sind, wobei das Host-Gerät so konfiguriert ist, dass es hostbasierte räumliche Informationen des Client-Geräts in der Host-Karte gemäß den Bilddaten erzeugt, und so konfiguriert ist, dass es die hostbasierten räumlichen Informationen an das Client-Gerät überträgt;
Erzeugen von Datenausrichtungsinformationen gemäß einer Differenz zwischen den hostbasierten räumlichen Informationen und den clientbasierten räumlichen Informationen des Client-Geräts in der Client-Karte;
Anpassen der clientbasierten räumlichen Informationen gemäß den Datenausrichtungsinformationen, um ausgerichtete räumliche Informationen des Client-Geräts in der Host-Karte zu erzeugen.

12. Mehrgerätsystem nach Anspruch 11, wobei das Mehrgerätsystem ferner ein anderes Client-Gerät aufweist;
wobei das andere Client-Gerät so konfiguriert ist zum:
Übertragen anderer Bilddaten an das Client-Gerät, wenn das Client-Gerät und das andere Client-Gerät kommunikativ verbunden sind, wobei das Client-Gerät ferner so konfiguriert ist, dass es andere hostbasierte räumliche Informationen des anderen Client-Geräts in der Host-Karte gemäß den anderen Bilddaten und den Datenausrichtungsinformationen erzeugt;
Erzeugen einer anderen Datenausrichtungsinformation gemäß einer Differenz zwischen der anderen hostbasierten räumlichen Information und einer anderen clientbasierten räumlichen Information des anderen Client-Geräts in einer anderen Client-Karte der Umgebung, die durch das andere Client-Gerät erstellt wurde; und
Anpassen der anderen clientbasierten räumlichen Informationen gemäß den anderen Datenausrichtungsinformationen, um andere ausgerichtete räumliche Informationen des anderen Client-Geräts in der Host-Karte zu erzeugen.

13. Mehrgerätsystem nach Anspruch 12, wobei das Client-Gerät so konfiguriert ist zum:
Berechnen von mindestens zwei Client-Posendaten des anderen Client-Geräts in der Client-Karte gemäß mindestens zwei Schlüsselbildrahmen der anderen Bilddaten; und
Anpassen der mindestens zwei Client-Posendaten gemäß den Datenausrichtungsinformationen, um die anderen hostbasierten räumlichen Informationen zu erzeugen.

14. Mehrgerätsystem nach Anspruch 12, wobei das Client-Gerät ferner so konfiguriert ist, dass es eine andere Ausrichtungsanforderung an das andere Client-Gerät sendet, um die anderen Bilddaten anzufordern.

15. Ein nicht-transitorisches, computerlesbares Speichermedium mit einem Computerprogramm zum Ausführen eines Datenausrichtungsverfahrens, das auf ein Mehrgerätsystem in einer Umgebung anwendbar ist, wobei das Mehrgerätsystem ein Host-Gerät und ein Client-Gerät aufweist und das Datenausrichtungsverfahren Folgendes aufweist:
durch das Host-Gerät, Erstellen einer Host-Karte der Umgebung durch einen Host-Kamerasensor des Host-Geräts und Lokalisieren des Host-Geräts in der Umgebung gemäß der Host-Karte;
durch das Client-Gerät, Erstellen einer Client-Karte der Umgebung durch einen Client-Kamera ssensor des Client-Geräts und Lokalisieren des Client-Geräts in der Umgebung gemäß der Client-Karte;
durch das Client-Gerät, Übertragen von Bilddaten an das Host-Gerät;
durch das Host-Gerät, Erzeugen von hostbasierten räumlichen Informationen des Client-Geräts in der Host-Karte der Umgebung gemäß den Bilddaten;
durch das Host-Gerät, Übertragen der hostbasierten räumlichen Informationen an das Client-Gerät;
durch das Client-Gerät, Erzeugen von Datenausrichtungsinformationen gemäß einer Differenz zwischen den hostbasierten räumlichen Informationen und den clientbasierten räumlichen Informationen des Client-Geräts in der Client-Karte; und
durch das Client-Gerät, Anpassen der clientbasierten räumlichen Informationen gemäß den Datenausrichtungsinformationen, um ausgerichtete räumliche Informationen des Client-Geräts in der Host-Karte zu erzeugen.

## Revendications

1. Procédé d'alignement de données, applicable à un système à plusieurs dispositifs dans un environnement, dans lequel le système à plusieurs dispositifs comprend un dispositif hôte (11) et un dispositif client (12), et le procédé d'alignement de données comprend :
par le dispositif hôte, l'établissement d'une carte hôte de l'environnement par un capteur de caméra hôte du dispositif hôte, et la localisation du dispositif hôte dans l'environnement selon la carte hôte ;
par le dispositif client, l'établissement d'une carte client de l'environnement par un capteur de caméra client du dispositif client, et la localisation du dispositif client dans l'environnement selon la carte client ;
par le dispositif client, la transmission (S303) de données d'image au dispositif hôte ;
par le dispositif hôte, la génération (S304) d'informations spatiales basées sur l'hôte du dispositif client dans la carte hôte de l'environnement en fonction des données d'image ;
par le dispositif hôte, transmission des informations spatiales basées sur l'hôte au dispositif client ;
par le dispositif client, générer (S306) des informations d'alignement de données en fonction d'une différence entre les informations spatiales basées sur l'hôte et les informations spatiales basées sur le client du dispositif client dans la carte client ; et
par le dispositif client, ajuster (S307) les informations spatiales basées sur le client en fonction des informations d'alignement des données, afin de générer des informations spatiales alignées du dispositif client dans la carte hôte.

2. Procédé d'alignement de données selon la revendication 1, comprenant en outre :
par le dispositif hôte, l'envoi (S301) d'une demande d'alignement au dispositif client pour demander les données d'image.

3. Procédé d'alignement de données selon la revendication 1, comprenant en outre :
par le dispositif client, en choisissant (S302) au moins deux images clés à partir d'un ensemble d'images clés comme données d'image, dans lequel l'ensemble d'images clés est généré après que le dispositif hôte et le dispositif client ont été connectés de manière communicative, les au moins deux images clés correspondent à au moins deux premières données de pose client du dispositif client dans la carte client, et les au moins deux premières données de pose client sont significativement différentes l'une de l'autre.

4. Procédé d'alignement de données selon la revendication 3, dans lequel la génération des informations spatiales basées sur l'hôte du dispositif client dans la carte hôte en fonction des données d'image comprend :
par le dispositif hôte, le calcul d'au moins deux secondes données de pose client du dispositif client dans la carte hôte en fonction des au moins deux images clés.

5. Procédé d'alignement de données selon la revendication 3, dans lequel une quantité de points caractéristiques de chacune des au moins deux images clés est supérieure à un seuil de quantité.

6. Procédé d'alignement de données selon la revendication 1, comprenant en outre :
par le dispositif client, l' la détermination (S305) si les informations spatiales basées sur l'hôte sont significativement différentes des informations spatiales basées sur le client, dans lequel les informations d'alignement de données sont générées lorsque les informations spatiales basées sur l'hôte ne sont pas significativement différentes des informations spatiales basées sur le client.

7. Procédé d'alignement de données selon la revendication 6, comprenant en outre :
par le dispositif client, la transmission (S302) d'au moins deux autres images clés au dispositif hôte lorsque les informations spatiales basées sur l'hôte sont significativement différentes des informations spatiales basées sur le client.

8. Procédé d'alignement de données selon la revendication 6, dans lequel la détermination (S305) si les informations spatiales basées sur l'hôte sont significativement différentes des informations spatiales basées sur le client comprend :
par le dispositif client, la détermination si une différence entre des premières données de transformation et des secondes données de transformation est inférieure à un seuil invalide, dans laquelle les premières données de transformation sont configurées pour transformer des premières données de pose client du dispositif client dans la carte client en d'autres premières données de pose client du dispositif client dans la carte client, et les secondes données de transformation sont configurées pour transformer des secondes données de pose client du dispositif client dans la carte hôte en d'autres secondes données de pose client du dispositif client dans la carte hôte.

9. Procédé d'alignement de données selon la revendication 1, comprenant en outre :
par un autre dispositif client du système à plusieurs dispositifs, la transmission (S602) d'autres données d'image au dispositif client ;
par le dispositif client, la génération (S603) d'une autre information spatiale basée sur l'hôte de l'autre dispositif client dans la carte hôte en fonction des autres données d'image et des informations d'alignement de données ;
par l'autre dispositif client, la génération (S604) d'autres informations d'alignement de données en fonction d'une différence entre les autres informations spatiales basées sur l'hôte et les autres informations spatiales basées sur le client de l'autre dispositif client dans une autre carte client de l'environnement établie par l'autre dispositif client ; et
par l'autre dispositif client, ajuster (S605) les autres informations spatiales basées sur le client en fonction des autres informations d'alignement de données, afin de générer d'autres informations spatiales alignées de l'autre dispositif client dans la carte hôte.

10. Procédé d'alignement de données selon la revendication 9, dans lequel la génération d'autres informations spatiales basées sur l'hôte d'un autre dispositif client dans la carte hôte en fonction d'autres données d'image et des informations d'alignement de données comprend :
par le dispositif client, le calcul d'au moins deux données de pose client d'un autre dispositif client dans la carte client en fonction d'au moins deux images clés d'autres données d'image ; et
par le dispositif client, l'ajustement des au moins deux données de pose client en fonction des informations d'alignement de données, afin de générer les autres informations spatiales basées sur l'hôte.

11. Système multi-appareils, comprenant :
un dispositif hôte (11), configuré pour établir une carte hôte d'un environnement à l'aide d'un capteur de caméra hôte du dispositif hôte, et localiser le dispositif hôte dans l'environnement en fonction de la carte hôte ; et
un dispositif client (12), configuré pour :
établir une carte client de l'environnement à l'aide d'un capteur de caméra client du dispositif client, et localiser le dispositif client dans l'environnement en fonction de la carte client ;
transmettre (S303) des données d'image au dispositif hôte lorsque le dispositif hôte et le dispositif client sont connectés de manière communicative, dans lequel le dispositif hôte est configuré pour générer des informations spatiales basées sur l'hôte du dispositif client dans la carte hôte en fonction des données d'image, et est configuré pour transmettre les informations spatiales basées sur l'hôte au dispositif client ;
générer des informations d'alignement de données en fonction d'une différence entre les informations spatiales basées sur l'hôte et les informations spatiales basées sur le client de l'appareil client dans la carte client ;
ajuster les informations spatiales basées sur le client en fonction des informations d'alignement des données, afin de générer des informations spatiales alignées du dispositif client dans la carte hôte.

12. Système multi-appareils selon la revendication 11, dans lequel le système multi-appareils comprend en outre un autre appareil client ;
dans lequel l'autre dispositif client est configuré pour :
transmettre d'autres données d'image au dispositif client lorsque le dispositif client et l'autre dispositif client sont connectés de manière communicative, dans lequel le dispositif client est en outre configuré pour générer d'autres informations spatiales basées sur l'hôte de l'autre dispositif client dans la carte hôte en fonction des autres données d'image et des informations d'alignement de données ;
générer d'autres informations d'alignement de données en fonction d'une différence entre les autres informations spatiales basées sur l'hôte et les autres informations spatiales basées sur le client de l'autre dispositif client dans une autre carte client de l'environnement établie par l'autre dispositif client ; et
ajuster les autres informations spatiales basées sur le client en fonction des autres informations d'alignement de données, afin de générer d'autres informations spatiales alignées de l'autre dispositif client dans la carte hôte.

13. Système multi-appareils selon la revendication 12, dans lequel l'appareil client est configuré pour :
calculer au moins deux données de pose client de l'autre dispositif client dans la carte client en fonction d'au moins deux images clés des autres données d'image ; et
ajuster les au moins deux données de pose client en fonction des informations d'alignement de données, afin de générer les autres informations spatiales basées sur l'hôte.

14. Système multi-appareils selon la revendication 12, dans lequel le dispositif client est en outre configuré pour envoyer une autre demande d'alignement à l'autre dispositif client afin de demander les autres données d'image.

15. Support de stockage non transitoire lisible par ordinateur avec un programme informatique pour exécuter un procédé d'alignement de données applicable à un système multi-appareils dans un environnement, dans lequel le système multi-appareils comprend un appareil hôte et un appareil client, et le procédé d'alignement de données comprend :
par le dispositif hôte, l'établissement d'une carte hôte de l'environnement par un capteur de caméra hôte du dispositif hôte, et la localisation du dispositif hôte dans l'environnement selon la carte hôte ;
par le dispositif client, l'établissement d'une carte client de l'environnement par un capteur d' s de caméra client du dispositif client, et la localisation du dispositif client dans l'environnement selon la carte client ;
par le dispositif client, la transmission de données d'image au dispositif hôte ;
par le dispositif hôte, générer des informations spatiales basées sur l'hôte du dispositif client dans la carte hôte de l'environnement en fonction des données d'image ;
par le dispositif hôte, transmission des informations spatiales basées sur l'hôte au dispositif client ;
par le dispositif client, générer des informations d'alignement de données en fonction d'une différence entre les informations spatiales basées sur l'hôte et les informations spatiales basées sur le client du dispositif client dans la carte client ; et
par le dispositif client, ajuster les informations spatiales basées sur le client en fonction des informations d'alignement des données, afin de générer des informations spatiales alignées du dispositif client dans la carte hôte.
